# EUROPEAN PATENT APPLICATION

(11) **EP 3 409 936 A1**
(43) Date of publication of application: **05.12.2018**
(21) Application number: 17305638.3
(22) Date of filing: 31.05.2017
(51) Int. Cl.: F02M 25/08, B60K 15/03, B60K 15/035

(54) **METHOD AND SYSTEM FOR DETERMINING A LEAK PRESENT IN A PRESSURIZED FUEL SYSTEM**

(71) Applicant: Plastic Omnium Advanced Innovation and Research, 1120 Bruxelles (BE)
(72) Inventor: CHAUSSINAND, Antoine, 1020 BRUXELLES (BE); BAJA, Mihai, 1200 BRUXELLES (BE); BELLEC, Ronan, 1120 BRUXELLES (BE)
(74) Representative: Debled, Thierry

(57) **Abstract**

The present invention relates to a method for determining whether there is leak present in a pressurized fuel system mounted on board of a vehicle when the vehicle is key-off. The method comprises the following steps:
- measuring temperature and pressure in the pressurized fuel system at predetermined time points;
- comparing temperature measurements with each other, so as to calculate a temperature differential between the highest temperature measurement and the lowest temperature measurement and
- comparing the temperature differential with a predetermined threshold for temperature differential.

If the temperature differential is less than the predetermined threshold for temperature differential, the method is then aborted aborting the method while, if the temperature differential is equal to or greater than the predetermined threshold for temperature differential, calculating a pressure differential between the pressure measurement measured at the same time point with the highest temperature measurement and the pressure measurement measured at the same time point with the lowest temperature measurement. In that case, the pressure differential is compared with a predetermined threshold for pressure differential, and the presence of a leak in the pressurized fuel system can be determined if the pressure differential is equal to or less than the predetermined threshold for pressure differential.

The invention allows a frequent enough determination of leak at reduced consumption and cost but with improved accuracy and which is capable of meeting the increasingly strict regulations of law.

## Description

### [Technical Field]

The invention relates to a method and an on-board system for determining whether there is a leak present in a pressurized fuel system of a vehicle, which can be a plug-in hybrid electric vehicle.

### [Background of the Invention]

On the one hand, applicable regulations require monitoring of a vehicle's evaporative emission situation to ensure integrity of its fuel system, especially a pressurized fuel system. In order to better protect the environment, related regulations tend to become stricter in many countries around the world. Accordingly, a fuel system on a vehicle must be periodically subjected to leak detection, to ensure that there is no breach in the fuel system. Such leak detection is mandatory once per drive cycle (a drive cycle is from key-on to the next key-on of the vehicle and includes parking time of the vehicle) in some countries where the related regulations are relatively stricter.

On the other hand, as the requirements for fuel economy and alternative fuel sources continue to move technology to electric vehicles, a type of vehicles known as plug-in hybrid electric vehicles (PHEV) has been created. These vehicles are designed to manage a predetermined distance in an all-electric mode, but have an internal combustion engine and associated liquid fuel tank on board to manage the times when the vehicle has exceeded its all-electric range. Moreover, a fuel system used for a PHEV vehicle is always a pressurized fuel system which has greater risk of leak.

Since a PHEV vehicle has the potential of running in an all-electric mode throughout the whole life of the vehicle, it is theoretically possible that its internal combustion engine will never run. Therefore, a leak detection method or system designed for a fuel vehicle might not apply to a PHEV vehicle.

Some existing solutions have been known, which use basic pressure relationships and assumptions of diurnal cycling and vehicle thermal mass to determine whether there is a leak within a fuel system. These solutions are usually coupled with an additional test which uses engine vacuum to detect if there is a leak, thereby increasing the frequency of detection, for example the solution described in US 6,550,316 B1. However, such additional test is not always applicable to a PHEV vehicle and reduces the frequency of the detection for such a method to the only cases when pressure is induced in the pressurized fuel system of the PHEV vehicle, for example during the running of the internal combustion engine of the PHEV vehicle.

Thus, some other existing solutions have been proposed to diagnose leak without the need for the internal combustion engine to run. These solutions consist in adding a dedicated, electrically powered vacuum or positive pressure pump to the fuel system. Such a pump is able to induce a vacuum or pressure on request, but at the cost of additional energy consumption and a significant number of extra components.

It can be seen that the existing solutions are not capable of detecting, at an expected frequency and a relatively low consumption and cost, whether there is a leak present in a pressurized fuel system of a vehicle during a drive cycle of the vehicle including the period when the vehicle is parking, in other words, is key-off. However, increasingly strict regulations of law in some countries require so.

### [Summary of the Invention]

In order to cope with the inconveniences of the existing solutions as described above, an objective of the invention consists in allowing a frequent enough determination of leak at reduced consumption and cost but with improved accuracy when a vehicle is key-off, which is capable of meeting the increasingly strict regulations of law without the need for induced pressure and thus applies to a pressurized fuel system for a vehicle of any type, such as a fuel vehicle and a PHEV vehicle.

To this end, according to an aspect of the invention, it is provided a method for determining whether there is leak present in a pressurized fuel system mounted on board of a vehicle when the vehicle is key-off. The method comprises the following steps:
- measuring temperature and pressure in the pressurized fuel system at predetermined time points;
- comparing temperature measurements with each other, so as to calculate a temperature differential between the highest temperature measurement and the lowest temperature measurement;
- comparing the temperature differential with a predetermined threshold for temperature differential;
- if the temperature differential is less than the predetermined threshold for temperature differential, aborting the method;
- if the temperature differential is equal to or greater than the predetermined threshold for temperature differential, calculating a pressure differential between the pressure measurement measured at the same time point with the highest temperature measurement and the pressure measurement measured at the same time point with the lowest temperature measurement;
- comparing the pressure differential with a predetermined threshold for pressure differential, and determining there is leak present in the pressurized fuel system if the pressure differential is equal to or less than the predetermined threshold for pressure differential.

The idea of the method is based on the basic fact that: if the pressurized fuel system is well sealed (no leak is present therein), along with the temperature which evolves enough, the pressure in the interior of the pressurized fuel system should evolve enough accordingly; on the contrary, if there is a leak present in the pressurized fuel system, the pressure would decrease sharply and then be maintained at a relatively balanced pressure level which could even be around 0 mbar relatively to the atmospheric pressure, regardless of the temperature evolution in the interior of the pressurized fuel system during this period.

Further to the basic fact, the method according to the invention conceives of using multiple measurement intervals as well as multiple computations to increase the accuracy of a passive leak detection. The method uses predetermined thresholds for temperature differential and for pressure differential to determine whether a leak is present in the pressurized fuel system. As a result, a more frequent leak detection strategy is maintained, and obviously the method according to the invention is particularly applicable to a PHEV vehicle.

Advantageously, the method begins at key-off of the vehicle. It is known that in some countries such as United-States where related regulations of law are relatively strict, it is mandatory to detect leak present in the pressurized fuel system of a vehicle during a drive cycle including the period when the engine of the vehicle is key-off. Particularly, in order to avoid sudden temperature/pressure evolution linked to the use of the vehicle (pump consumption, slosh, ambient pressure quick evolution and so on), it is advantageous to select the key-off period of the engine to begin a leak detection. Thus, a leak detection according to the method of the invention could be activated by the event of key-off of the vehicle.

Preferably, the predetermined threshold for temperature differential is chosen between 1°C and 5°C, preferably between 2°C and 3°C. However, the predetermined threshold for temperature differential could be chosen as a function of particular conditions, such as ambient temperature evolution, so as to obtain such a compromise that the predetermined threshold for temperature differential could be high enough to expect a large pressure evolution (helping the predetermined threshold for pressure differential) and low enough to be applicable as often as possible.

Also, the predetermined threshold for pressure differential could be chosen between 5 mbar and 35 mbar and is preferably 15 mbar. Advantageously, the predetermined threshold for pressure differential is chosen to be 5 to 15 times greater than the predetermined threshold for temperature differential: 5 times if the Reid Vapor Pressure (RVP) is low (6-7 psi) and 15 time if the RVP is high (14 psi). In case where the RVP is unknown, the predetermined threshold for pressure differential is set to 5 times greater than the predetermined threshold for temperature differential.

According to a particular embodiment, before calculating the pressure differential, the method further comprises steps as follows:
- comparing pressure measurements with each other, so as to evaluate a change trend of the pressure in the pressurized fuel system;
- if it is evaluated that the pressure in the pressurized fuel system decreases while the temperature in the pressurized fuel system increases, determining there is leak present in the pressurized fuel system.

Obviously, the principle of fuel vaporization/condensation applies to the pressurized fuel system if it is well sealed; detection of a phenomenon to the contrary means a leak present in the pressurized fuel system.

According to another particular embodiment, the method further comprises steps as follows:
- comparing each of the pressure measurements with a predetermined threshold for pressure;
- if there are a predetermined number of pressure measurements greater than the calculated threshold for pressure, determining there is no leak present in the pressurized fuel system and the method is completed.

This embodiment is based on the fact that: a very high pressure indicates that the pressurized fuel system is well sealed and no leak is present therein, whatever the temperature evolution is. Furthermore, it is possible to calibrate the predetermined threshold for pressure based on the temperature.

According to still another particular embodiment, before calculating the pressure differential, the method further comprises a calibration step for calibrating the pressure measurements in which an ambient pressure measurement is used as a calibration factor. As the pressure measurements can be impacted by the ambient pressure variations, the ambient pressure measurement can be applied as a correcting factor in the pressure differential calculation in order to increase the accuracy.

According to yet another particular embodiment, before calculating the pressure differential, the method further comprises an adjustment step for adjusting the predetermined threshold for pressure differential, in which the predetermined threshold for pressure differential can be adjusted according to the time point when the highest temperature measurement is measured and the time point when the lowest temperature measurement is measured in order to increase the accuracy.

Preferably, the number of time points for measuring temperature and pressure and time intervals between the time points are predetermined so as to optimize the highest temperature measurement.

More preferably, the number of time points for measuring temperature and pressure and time intervals between the time points are predetermined by taking the ambient temperature and the temperature in a fuel tank when the vehicle is being key-off into account. According to an economic and practical example, the time points for measuring temperature and pressure are preferably 0.5, 2, 3, 6, 8, 10, 12 and 24 hours after the vehicle is key-off. However, the number of time points for measuring temperature and pressure and time intervals between the time points are not limited to this example and could be predetermined as required by the related regulations of law or as a result of one or more of the previous measurements.

In a particular embodiment, according to conditions comprising a condition that in the pressurized fuel system the temperature is higher than 25°C, preferably higher than 30°C and the Reid Vapor Pressure is higher than 10 psi (69 kPa), a particular pair of temperature measurements is chosen for calculating the temperature differential between them. The particular pair of temperature measurements can be selected for example as follows: two temperature measurements measured when the temperature decreases, or two temperature measurements measured only when the temperature is lower than a predetermined threshold for temperature.

Alternatively, based on the same idea of the invention, for the purpose of further reducing the consumption and the time to obtain a decision it is conceived of that the highest or lowest temperature measurement could be obtained at each measurement and if the predetermined threshold for temperature differential is met, a decision of presence or absence of leak can be made and then the method could be stopped. Thus, according to an alternative of the invention, it is provided a method for determining whether there is leak present in a pressurized fuel system mounted on board of a vehicle when the vehicle is key-off. The method comprises steps as follows:
- measuring temperature and pressure in the pressurized fuel system at predetermined time points;
- at each predetermined time point, once measuring temperature, comparing a temperature measurement measured at this predetermined time point with the highest temperature measurement or the lowest temperature measurement measured at the previous predetermined time points, so as to update the highest temperature measurement or the lowest temperature measurement, and then calculate a temperature differential between the highest temperature measurement and the lowest temperature measurement;
- comparing the temperature differential with a predetermined threshold for temperature differential;
- if the temperature differential is less than the predetermined threshold for temperature differential, continuing to measure temperature and pressure in the pressurized fuel system;
- if the temperature differential is equal to or greater than the predetermined threshold for temperature differential, stopping measuring temperature and pressure in the fuel system and calculating a pressure differential between the pressure measurement measured at the same time point with the highest temperature measurement and the pressure measurement measured at the same time point with the lowest temperature measurement;
- comparing the pressure differential with a predetermined threshold for pressure differential, and determining there is leak present in the pressurized fuel system if the pressure differential is equal to or less than the predetermined threshold for pressure differential, and hereby aborting the method.

Advantageously, in the alternative, if the criterions "if the temperature differential is equal to or greater than the predetermined threshold for temperature differential" and "determining there is no leak present in the pressurized fuel system (in other words, if the pressure differential is greater than the predetermined threshold for pressure differential)" are both met, the following measuring are no longer performed and the method could be aborted. This allows to further reduce electric consumption.

Also alternatively, based on the same idea of the invention, for the purpose of providing a redundancy to confirm and improve robustness especially in case of presence of leak, it is conceived of that among all the temperature measurements, if there are two or more pairs of temperature measurements of which the temperature differential of each pair are equal to or greater the predetermined threshold for temperature differential, two or more decisions of presence or absence of leak can be made. Thus, according to another alternative of the invention, it is provided a method for determining whether there is leak present in a pressurized fuel system mounted on board of a vehicle when the vehicle is key-off. The method comprises preferably successive steps as follows:
- measuring temperature and pressure in the pressurized fuel system at predetermined time points;
- comparing temperature measurements with each other, so as to calculate at least a first greatest temperature differential and a second greatest temperature differential;
- comparing the first greatest temperature differential with a predetermined threshold for temperature differential;
- if the first greatest temperature differential is less than the predetermined threshold for temperature differential, aborting the method;
- if the first greatest temperature differential is equal to or greater than the predetermined threshold for temperature differential, calculating a first pressure differential between the two pressure measurements measured at the same time point with the two temperature measurements corresponding to the first temperature differential;
- comparing the first pressure differential with a predetermined threshold for pressure differential, and determining there may be leak present in the pressurized fuel system if the first pressure differential is equal to or less than the predetermined threshold for pressure differential, and then comparing the second greatest temperature differential with the predetermined threshold for temperature differential;
- if the second greatest temperature differential is also equal to or greater than the predetermined threshold for temperature differential, calculating a second pressure differential between the two pressure measurements measured at the same time point with the two temperature measurements corresponding to the second temperature differential;
- comparing the second pressure differential with the predetermined threshold for pressure differential, and ensuring there is leak present in the pressurized fuel system if the second pressure differential is also equal to or less than the predetermined threshold for pressure differential, and hereby aborting the method.

Advantageously, if the criterions "if the first temperature differential is equal to or greater than the predetermined threshold for temperature differential" and "determining there may be leak present in the pressurized fuel system (in other words, if the first pressure differential is equal to or less than the predetermined threshold for pressure differential)" are both met, the following measurements could be used as redundancy or redundancies and increases the accuracy.

According to another aspect of the invention, it is provided a leak determination system for determining if there is leak present in a pressurized fuel system mounted on board of a vehicle when the vehicle is key-off, comprising a temperature measuring device for measuring a liquid temperature and/or a vapor temperature in the pressurized fuel system, a pressure measuring device for measuring vapor pressure in the pressurized fuel system and a central control unit. The leak determination system is capable of implementing the method as described above.

According to yet another aspect of the invention, it is provided a vehicle comprising a pressurized fuel system, characterized in that it comprises a leak determination system as described above.

### [Brief Description of the Drawings]

These and other aspects and advantages of the invention will be clearer with reference to the accompanying figures, given by way of explanatory and non-restrictive examples, and in which:
- Figure 1 illustrates an overview of an explanatory pressurized fuel system which comprises a leak determination system according to an embodiment of the invention;
- Figure 2 illustrates a flow chart of an embodiment of a leak determination method according to the invention;
- Figure 3 illustrates a curve graph showing an evolution of temperature and pressure over time in the interior of a pressurized fuel system without presence of leak;
- Figure 4 illustrates a table listing indexed measurements of temperature and pressure in the interior of a pressurized fuel system without presence of leak;
- Figure 5 illustrates a curve graph showing an evolution of temperature and pressure over time in the interior of a pressurized fuel system with presence of leak;
- Figure 6 illustrates a table listing indexed measurements of temperature and pressure in the interior of a pressurized fuel system with presence of leak.

### [Description of the Preferred Embodiments]

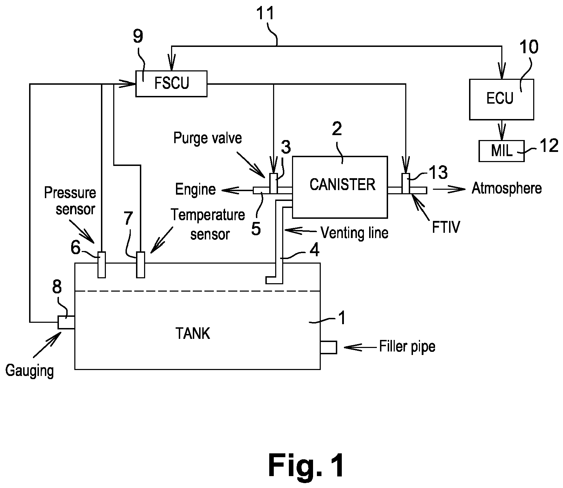

Figure 1 illustrates an overview of an explanatory pressurized fuel system which comprises a leak determination system according to an embodiment of the invention. It should be understood that although the pressurized fuel system as illustrated in Figure 1 is of type applicable to a PHEV vehicle, the leak determination system it comprises is universal and thus could apply to varied pressurized fuel systems and does not limit to the one as illustrated.

The pressurized fuel system as shown in Figure 1 comprises a fuel tank 1 that is in fluid communication with a charcoal canister 2. In order to realize the different operation modes of the internal combustion engine (running with or without purge, key-off (parking for all vehicles or electric mode for a PHEV vehicle) etc.), the pressurized fuel system comprises different lines, pipes and valves, which are not detailed here for brevity.

The leak determination system according to an embodiment of the invention as shown in Figure 1 comprises a temperature measuring device 7 for measuring a liquid temperature and/or a vapor temperature in the pressurized fuel system 1, a pressure measuring device 6 for measuring vapor pressure in the pressurized fuel system and a central control unit 9.

Specifically, the pressure measuring device 6 could be a pressure sensor adapted for measuring the pressure inside the fuel tank 1, which is comprised within a working range of pressure, for example from -150mbar to +350mbar in a pressurized fuel system of a plug-in hybrid vehicle. In a particular embodiment, the pressure measuring device 6 can be an absolute pressure sensor. In another particular embodiment, the pressure sensor 6 can be a relative pressure sensor. In this last embodiment, an absolute pressure can be predicted by combining the measurement of the relative pressure sensor with the atmospheric pressure which could be measured by a dedicated atmospheric pressure sensor at vehicle start-up and shut-down.

The temperature measuring device 7 could be a temperature sensor adapted for measuring the temperature inside the fuel tank 1.

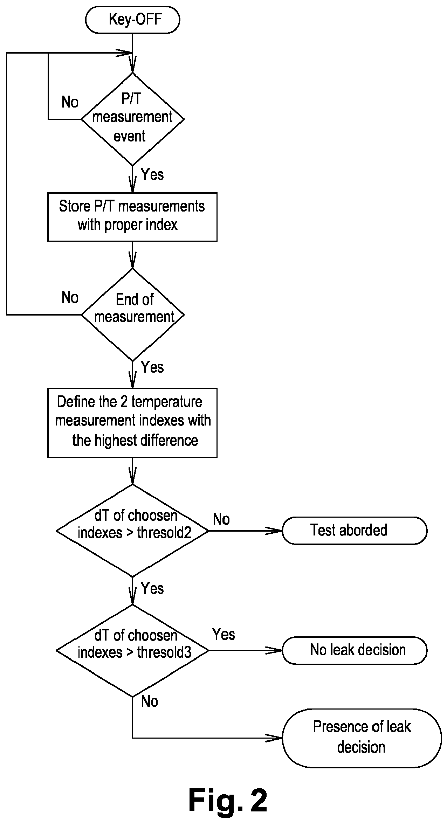

The central control unit 9 here in the embodiment as illustrated in Figure 1 is a Fuel System Control Unit (FSCU) configured to execute an algorithm for implementing the method according to another aspect of the invention (described hereafter in relation with figure 2). It thus processes temperature and pressure measurements measured by the pressure measuring device 6 and the temperature measuring device 7, in order to determine whether there is a leak present in the pressurized fuel system of Figure 1. Preferably, the FSCU communicates with an Engine Control Unit (ECU) 10 via of a communication bus 11. The ECU is in charge of making a warning when operation problem is detected. For example in case of determination of a leak, the ECU can activate a Malfunction Indicator Light (MIL) 12 on the dashboard of the vehicle, send a message to the driver of the vehicle, or sound an alarm. In another embodiment, the central control unit 9 can be the ECU, or another existing control unit (i.e. microprocessor) on the vehicle.

Figure 2 illustrates a flow chart of an embodiment of a leak determination method according to the invention. Here, the flow chart shows an algorithm (on-board diagnostic) executed by the central control unit for determining a presence/absence of a leak in a pressurized fuel system such as the one of Figure 1.

At first, the vehicle is key-off (i.e. engine is shut off), which triggers an initial event for measuring the pressure and temperature in the interior of the pressurized fuel system (within the fuel tank). Alternatively, the measurement event could be triggered by another action from an operator (who could be or not be the driver of the vehicle) for example by pressing a button on the dashboard. According to an embodiment, the step of measuring is repeated a predetermined number of times, in other words, the temperature and the pressure are measured at predetermined time points.

Then the central control unit 9 stores and preferably index the pressure measurements P measured by the pressure measuring device 6 and the temperature measurements T measured by the temperature measuring device 7 in a memory (or buffer). The index points correspond to the predetermined time points of measuring.

When the step of measuring ends, a step of comparing the indexed temperature measurements with each other is carried out, in order to calculate a maximum temperature differential (delta, i.e. *δ*) within the total detection timeframe (in other words, to calculate a temperature differential between the highest temperature measurement and the lowest temperature measurement).

Then the method proceeds to a step of comparing the maximum temperature differential with a predetermined threshold for temperature differential, for example 3 degrees Celsius:
- If the maximum temperature differential is less than the predetermined threshold for temperature differential, the method is aborted as there is not sufficient temperature evolution to make a proper determination of leak.
- On the contrary, if the predetermined threshold for temperature differential is met between the pair of highest and lowest temperature measurements each of which corresponds to an index point, the method then proceeds to calculate a pressure differential between the pair of pressure measurements at the same index points. Then, the method proceeds to a step of comparing the pressure differential with a predetermined threshold for pressure differential:
   - if the pressure differential is greater than the predetermined threshold for pressure differential, determining there is no leak present in the pressurized fuel system;
   - otherwise, determining there is leak present in the pressurized fuel system

In the embodiment as described above with reference to Figure 2, only the maximum temperature differential between the pair of highest and lowest temperature measurements (i.e. the first highest temperature measurement and the first lowest temperature measurement) is taken into account. However, alternatively, in order to confirm and improve robustness especially in case of determining presence of leak, at least the pair of the second highest and the second lowest temperature measurements, whose temperature differential possibly also meets the predetermined threshold for temperature differential, could be used as a redundancy. This embodiment can also refer to the flow chart illustrated in Figure 2.

Additionally, in some extreme cases, a particular pair of temperature measurements can be chosen for calculating the temperature differential between them. The cases in question comprise the following case: in the pressurized fuel system, the temperature is higher than 25°C, preferably higher than 30°C and the Reid Vapor Pressure is higher than 10 psi (69 kPa).

Advantageously, the central control unit 9 receives information comprising the ambient pressure measured for example by a dedicated ambient pressure sensor mounted on the vehicle at the predetermined time points, and/or the ambient temperature measured by a dedicated ambient temperature sensor mounted on the vehicle during parking of the vehicle, and/or the tank temperature measured at key-off of the vehicle and so on. The information could be useful for calibrating the pressure measurements, or adjusting the predetermined thresholds, or adjusting the number of or the time intervals between the predetermined time points for measuring temperature and pressure. As an example for calibrating the pressure measurements or adjusting the predetermined threshold for pressure differential, if the ambient pressure increases by 10 mbar and the relative pressure decreases by 10 mbar, the absolute pressure in the pressurized fuel system actually changes by 20 mbar. As an example for predetermining the number of time points for measuring temperature and pressure and time intervals between the time points, if the temperature differential between the ambient temperature and the vapor temperature is great, the vapor temperature will change quickly and the next time point can be chosen to be earlier than the initial calibration; on the contrary, if the vapor temperature is approximately equal to the ambient temperature, the next time point can be chosen to be later as there is not temperature evolution expected. For details, reference can be made to the publication WO2013/164460A1, of which the corresponding disclosure is thus incorporated herein by reference.

An alternative leak determination method according to the invention is carried out at a further reduced consumption. This alternative method can also refer to the flow chart illustrated in Figure 2 and is different from the embodiment as described above by that: at each predetermined time point, the highest temperature measurement or the lowest temperature measurement is updated and a temperature differential between the updated highest temperature measurement and the updated lowest temperature measurement is calculated, until the predetermined threshold for temperature differential is met; once the predetermined threshold for temperature differential is met, the alternative method stops measuring temperature and pressure and proceeds to calculate and compare the pressure differential. According to this alternative method, the number of measuring operation is probably reduced, which allows to reduce consumption and time to obtain a determination of leak.

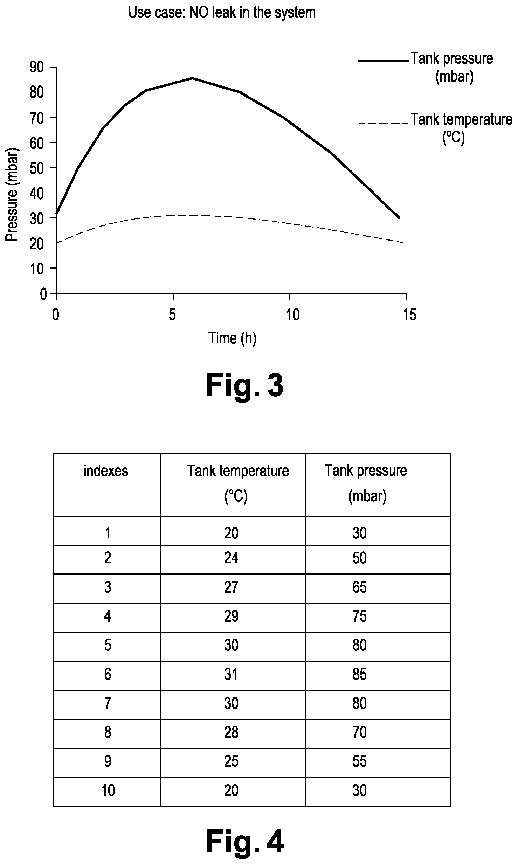

Figures 3-6 could be helpful for better understanding the basic idea of the invention.

Figure 3 illustrates a curve graph showing an evolution of temperature and pressure over time in the interior of a pressurized fuel system without presence of leak. It can be seen from the curve graph of Figure 3 that in the interior of a pressurized fuel system without leak, along with the temperature which evolves enough, the pressure evolves enough accordingly. This is clearly shown also in the table of Figure 4, which lists indexed measurements of temperature and pressure in the interior of a pressurized fuel system without leak. A phenomenon can be seen from the figures that the pressure increases along with the increasing of the temperature and decreases also along with the decreasing of the temperature, which conforms to the principle of fuel vaporization/condensation.

Below is a description of an example of the above-mentioned alternative method with reference to figures 3-4:
- measuring the temperature and pressure in the pressurized fuel system at predetermined time points;
- updating the highest and lowest temperature measurements at each predetermined time point;
- it is found that for indexes 1 and 2, the temperature differential is +4°C and greater than the predetermined threshold for temperature differential which is for example 3 degrees Celsius, than the method proceeds to the next step with this pair of temperature measurements;
- the pressure measurements of the selected indexes 1 and 2 are compared and their pressure differential is +20mbar;
- as the criterion "if the pressure differential is greater than the predetermined threshold for pressure differential (which is 15 mbar in this example)" is met, determining there is no leak present in the pressurized fuel system.

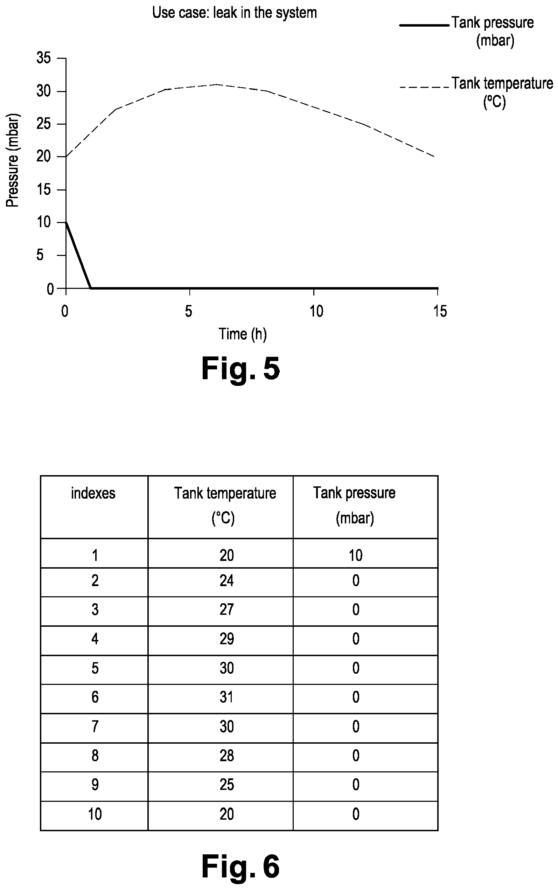

On the contrary, Figure 5 illustrates a curve graph showing an evolution of temperature and pressure over time in the interior of a pressurized fuel system with presence of leak. It can be seen from the curve graph of Figure 5 that in the interior of a pressurized fuel system with presence of leak (the sealing of the pressurized fuel system is damaged), the pressure decreases sharply and fall to around 0 mbar relatively to the atmospheric pressure in a short time, regardless of the temperature evolution during this period. This is clearly shown also in the table of Figure 6, which lists indexed measurements of temperature and pressure in the interior of a pressurized fuel system with presence of leak.

Below is a description of an example of the above-mentioned alternative method with reference to figures 5-6:
- measuring the temperature and pressure in the pressurized fuel system at predetermined time points;
- updating the highest and lowest temperature measurements at each predetermined time point;
- it is found that for indexes 1 and 2, the temperature differential is +4°C and greater than the predetermined threshold for temperature differential which is for example 3 degrees Celsius, than the method proceeds to the next step with this pair of temperature measurements;
- the pressure measurements of the selected indexes 1 and 2 are compared and their pressure differential is -10mbar;
- as the criterion "if the pressure differential is greater than the predetermined threshold for pressure differential" is not met, determining there is leak present in the pressurized fuel system.

Note that in this example, since there is a period where the pressure decreases while the temperature increases, this also allows to determine presence of leak according to another particular embodiment of the invention.

So far, the invention has been described by means of a limited number of embodiments, however this was done to illustrate the invention, and not to limit its scope. It's apparent to a person skilled in the art that without prejudice to the underlying principles of the invention, the details and the embodiments may vary, even appreciably, with respect to what has been described by way of example only, without departing from the scope of the invention as defined by the annexed claims.

## Claims

1. A method for determining whether there is leak present in a pressurized fuel system mounted on board of a vehicle when the vehicle is key-off, **characterized in that** the method comprises the following steps:
- measuring temperature and pressure in the pressurized fuel system at predetermined time points;
- comparing temperature measurements with each other, so as to calculate a temperature differential between the highest temperature measurement and the lowest temperature measurement;
- comparing the temperature differential with a predetermined threshold for temperature differential;
- if the temperature differential is less than the predetermined threshold for temperature differential, aborting the method;
- if the temperature differential is equal to or greater than the predetermined threshold for temperature differential, calculating a pressure differential between the pressure measurement measured at the same time point with the highest temperature measurement and the pressure measurement measured at the same time point with the lowest temperature measurement;
- comparing the pressure differential with a predetermined threshold for pressure differential, and determining there is leak present in the pressurized fuel system if the pressure differential is equal to or less than the predetermined threshold for pressure differential.

2. The method according to the preceding claim, wherein the method begins at key-off of the vehicle.

3. The method according to any one of the preceding claims, wherein the predetermined threshold for temperature differential is chosen between 1°C and 5°C, preferably between 2 °C and 3°C, and the predetermined threshold for pressure differential is chosen between 5 mbar and 35 mbar.

4. The method according to any one of the preceding claims, wherein before calculating the pressure differential, the method further comprises steps as follows:
- comparing pressure measurements with each other, so as to evaluate a change trend of the pressure in the pressurized fuel system;
- if it is evaluated that the pressure in the fuel system decreases while the temperature in the fuel system increases, determining there is leak present in the fuel system.

5. The method according to any one of the preceding claims, wherein, the method further comprises steps as follows:
- comparing each of the pressure measurements with a predetermined threshold for pressure;
- if there are a predetermined number of pressure measurements greater than the calculated threshold for pressure, determining there is no leak present in the pressurized fuel system and the method is completed.

6. The method according to any one of the preceding claims, wherein before calculating the pressure differential, the method further comprises a calibration step for calibrating the pressure measurements in which an ambient pressure measurement is used as a calibration factor.

7. The method according to any one of the preceding claims, wherein before calculating the pressure differential, the method further comprises an adjustment step for adjusting the predetermined threshold for pressure differential, in which the predetermined threshold for pressure differential can be adjusted according to the time point when the highest temperature measurement is measured and the time point when the lowest temperature measurement is measured.

8. The method according to any one of the preceding claims, wherein the number of time points for measuring temperature and pressure and time intervals between the time points are predetermined so as to optimize the highest temperature measurement.

9. The method according to the preceding claim, wherein the number of time points for measuring temperature and pressure and time intervals between the time points are predetermined by taking the ambient temperature and the temperature in a fuel tank when the vehicle is being key-off into account.

10. The method according to claim 9, wherein the time points for measuring temperature and pressure are preferably 0.5, 2, 3, 6, 8, 10, 12 and 24 hours after the vehicle is key-off.

11. The method according to any one of the preceding claims, wherein according to conditions comprising a condition that in the pressurized fuel system the temperature is higher than 25°C, preferably higher than 30°C and the Reid Vapor Pressure is higher than 10 psi (69 kPa), a particular pair of temperature measurements is chosen for calculating the temperature differential between them.

12. A method for determining whether there is leak present in a pressurized fuel system mounted on board of a vehicle when the vehicle is key-off, **characterized in that** the method comprises steps as follows:
- measuring temperature and pressure in the pressurized fuel system at predetermined time points;
- at each predetermined time point, once measuring temperature, comparing a temperature measurement measured at this predetermined time point with the highest temperature measurement or the lowest temperature measurement measured at the previous predetermined time points, so as to update the highest temperature measurement or the lowest temperature measurement, and then calculate a temperature differential between the highest temperature measurement and the lowest temperature measurement;
- comparing the temperature differential with a predetermined threshold for temperature differential;
- if the temperature differential is less than the predetermined threshold for temperature differential, continuing to measure temperature and pressure in the fuel system;
- if the temperature differential is equal to or greater than the predetermined threshold for temperature differential, stopping measuring temperature and pressure in the pressurized fuel system and calculating a pressure differential between the pressure measurement measured at the same time point with the highest temperature measurement and the pressure measurement measured at the same time point with the lowest temperature measurement;
- comparing the pressure differential with a predetermined threshold for pressure differential, and determining there is leak present in the pressurized fuel system if the pressure differential is equal to or less than the predetermined threshold for pressure differential, and hereby aborting the method.

13. A method for determining whether there is leak present in a pressurized fuel system mounted on board of a vehicle when the vehicle is key-off, **characterized in that** the method comprises preferably successive steps as follows:
- measuring temperature and pressure in the pressurized fuel system at predetermined time points;
- comparing temperature measurements with each other, so as to calculate at least a first greatest temperature differential and a second greatest temperature differential;
- comparing the first greatest temperature differential with a predetermined threshold for temperature differential;
- if the first greatest temperature differential is less than the predetermined threshold for temperature differential, aborting the method;
- if the first greatest temperature differential is equal to or greater than the predetermined threshold for temperature differential, calculating a first pressure differential between the two pressure measurements measured at the same time point with the two temperature measurements corresponding to the first temperature differential;
- comparing the first pressure differential with a predetermined threshold for pressure differential, and determining there may be leak present in the pressurized fuel system if the first pressure differential is equal to or less than the predetermined threshold for pressure differential, and then comparing the second greatest temperature differential with the predetermined threshold for temperature differential;
- if the second greatest temperature differential is also equal to or greater than the predetermined threshold for temperature differential, calculating a second pressure differential between the two pressure measurements measured at the same time point with the two temperature measurements corresponding to the second temperature differential;
- comparing the second pressure differential with the predetermined threshold for pressure differential, and ensuring there is leak present in the pressurized fuel system if the second pressure differential is also equal to or less than the predetermined threshold for pressure differential, and hereby aborting the method.

14. A method according to claim 13 wherein the results of the comparison of the two pressure differentials with the said predetermined thresholds leads to contradictory conclusions and wherein priority is given to the comparison operated with the pair of measures having the largest temperature differential.

15. A leak determination system for determining if there is leak present in a pressurized fuel system mounted on board of a vehicle when the vehicle is key-off, comprising a temperature measuring device for measuring a liquid temperature and/or a vapor temperature in the pressurized fuel system, a pressure measuring device for measuring vapor pressure in the pressurized fuel system and a central control unit, **characterized in that** the leak determination system is capable of implementing the method according to any one of claims 1- 14.

16. A vehicle comprising a pressurized fuel system, **characterized in that** it comprises a leak determination system according to the preceding claim.

## Amended claims

### Amended claims in accordance with Rule 137(2) EPC.

1. A method for determining whether there is leak present in a pressurized fuel system mounted on board of a vehicle when the vehicle is key-off, **characterized in that** the method comprises the following steps:
- measuring temperature T and pressure P in the pressurized fuel system at predetermined time points;
- comparing temperature measurements Tᵢ with each other, so as to calculate a temperature differential T_{Δ} between the highest temperature measurement Tₕ and the lowest temperature measurement Tₗ;
- comparing the temperature differential T_{Δ} with a predetermined threshold for temperature differential T1_{Δ};
- if the temperature differential T_{Δ} is less than the predetermined threshold for temperature differential T1_{Δ}, aborting the method;
- if the temperature differential T_{Δ} is equal to or greater than the predetermined threshold for temperature differential T1_{Δ}, calculating a pressure differential P_{Δ} between the pressure measurement Pⱼ measured at the same time point with the highest temperature measurement Tₕ and the pressure measurement Pⱼ measured at the same time point with the lowest temperature measurement Tₗ;
- comparing the pressure differential P_{Δ} with a predetermined threshold for pressure differential P1_{Δ}, and determining there is leak present in the pressurized fuel system if the pressure differential P1_{Δ} is equal to or less than the predetermined threshold for pressure differential P1_{Δ}.

2. The method according to the preceding claim, wherein the method begins at key-off of the vehicle.

3. The method according to any one of the preceding claims, wherein the predetermined threshold for temperature differential T1_{Δ} is chosen between 1°C and 5°C, preferably between 2°C and 3°C, and the predetermined threshold for pressure differential P1_{Δ} is chosen between 5 mbar and 35 mbar.

4. The method according to any one of the preceding claims, wherein before calculating the pressure differential P_{Δ}, the method further comprises steps as follows:
- comparing pressure measurements Pⱼ with each other, so as to evaluate a change trend of the pressure in the pressurized fuel system;
- if it is evaluated that the pressure in the fuel system decreases while the temperature in the fuel system increases, determining there is leak present in the fuel system.

5. The method according to any one of the preceding claims, wherein, the method further comprises steps as follows:
- comparing each of the pressure measurements Pⱼ with a predetermined threshold for pressure P1;
- if there are a predetermined number of pressure measurements greater than the calculated threshold for pressure, determining there is no leak present in the pressurized fuel system and aborting the method.

6. The method according to any one of the preceding claims, wherein before calculating the pressure differential P1_{Δ}, the method further comprises a calibration step for calibrating the pressure measurements Pⱼ in which an ambient pressure measurement is used as a calibration factor.

7. The method according to any one of the preceding claims, wherein before calculating the pressure differential P_{Δ}, the method further comprises an adjustment step for adjusting the predetermined threshold for pressure differential P1_{Δ}, in which the predetermined threshold for pressure differential P1_{Δ} can be adjusted according to the time point when the highest temperature measurement is measured and the time point when the lowest temperature measurement is measured.

8. The method according to any one of the preceding claims, wherein the number of time points for measuring temperature T and pressure P and time intervals between the time points are predetermined so as to optimize the highest temperature measurement.

9. The method according to the preceding claim, wherein the number of time points for measuring temperature T and pressure P and time intervals between the time points are predetermined by taking the ambient temperature and the temperature in a fuel tank (1) when the vehicle is being key-off into account.

10. The method according to claim 9, wherein the time points for measuring temperature T and pressure P are preferably 0.5, 2, 3, 6, 8, 10, 12 and 24 hours after the vehicle is key-off.

11. The method according to any one of the preceding claims, wherein according to conditions comprising a condition that if the temperature in the pressurized fuel system is higher than 25°C, preferably higher than 30 °C a particular pair of temperature measurements, for example two temperature measurements Tᵢ, is chosen for calculating the temperature differential T_{Δ} between them.

12. The method according to claim 11, wherein the Reid Vapor Pressure is higher than 69 kPa (10 psi).

13. A method for determining whether there is leak present in a pressurized fuel system mounted on board of a vehicle when the vehicle is key-off, **characterized in that** the method comprises steps as follows:
- measuring temperature T and pressure P in the pressurized fuel system at predetermined time points;
- at each predetermined time point, once measuring temperature, comparing a temperature measurement Tᵢ measured at this predetermined time point with the highest temperature measurement Tₕ or the lowest temperature measurement Tₗ, measured at the previous predetermined time points, so as to update the highest temperature measurement Tₕ or the lowest temperature measurement Tₗ, and then calculate a temperature differential T_{Δ} between the highest temperature measurement Tₕ and the lowest temperature measurement Tₗ;
- comparing the temperature differential T_{Δ} with a predetermined threshold for temperature differential T1_{Δ};
- if the temperature differential T_{Δ} is less than the predetermined threshold for temperature differential T1_{Δ}, continuing to measure temperature T and pressure P in the fuel system;
- if the temperature differential T_{Δ} is equal to or greater than the predetermined threshold for temperature differential T1_{Δ}, stopping measuring temperature T and pressure P in the pressurized fuel system and calculating a pressure differential P_{Δ} between the pressure measurement Pⱼ measured at the same time point with the highest temperature measurement Tₕ and the pressure measurement Pⱼ measured at the same time point with the lowest temperature measurement Tₗ;
- comparing the pressure differential P_{Δ} with a predetermined threshold for pressure differential P1_{Δ}, and determining there is leak present in the pressurized fuel system if the pressure differential P_{Δ} is equal to or less than the predetermined threshold for pressure differential P1_{Δ}, and hereby aborting the method.

14. A method for determining whether there is a leak present in a pressurized fuel system mounted on board of a vehicle when the vehicle is key-off, **characterized in that** the method comprises the following steps:
m) measuring the temperature T in the pressurized fuel system at predetermined time points t1ᵢ and providing temperature measurements Tᵢ;
n) processing the temperature measurements Tᵢ measured at predetermined time points t1ᵢ and providing processed temperature measurements T'ᵢ;
o) comparing the processed temperature measurements T'ᵢ;
p) calculating a temperature differential T_{Δ} between a first processed temperature measurement T'ₕ measured at a first predetermined time point t1ₕ and a second processed temperature measurement T'ₗ measured at a second predetermined time point t1ₗ;
q) comparing the temperature differential T_{Δ} with a predetermined threshold for temperature differential T1_{Δ};
r) performing a first action A if the temperature differential T_{Δ} is less than the predetermined threshold for temperature differential;
s) performing a second action B if the temperature differential T_{Δ} is equal to or greater than the predetermined threshold for temperature differential.
t) measuring the pressure P in the pressurized fuel system at predetermined time points t2ⱼ dependent on predetermined time points t1ᵢ, and providing pressure measurements Pⱼ;
u) processing the pressure measurements Pⱼ measured at predetermined time points t2ⱼ and providing processed pressure measurements P'ᵢ;
v) calculating a pressure differential P_{Δ} between a first processed pressure measurement P'ₕ measured at a third predetermined time point t2ₕ and a second processed pressure measurement P'ₗ measured at a fourth predetermined time point t2ₗ;
w) comparing the pressure differential P_{Δ} with a predetermined threshold for pressure differential P1_{Δ};
x) determining there is a leak present in the pressurized fuel system if the pressure differential P_{Δ} is equal to or less than the predetermined threshold for pressure differential.

15. The method according to claim 14, **characterized in that**:
- in step c) the processed temperature measurements T'ᵢ are compared with each other so as to identify the highest processed temperature measurement and the lowest processed temperature measurement;
- in step d) the first processed temperature measurement T'ₕ is the highest processed temperature measurement and the second processed temperature measurement T'ₗ is the lowest processed temperature measurement;
- in step f) the first action A is aborting the method;
- in step g) the second action B is going to step h);
- in steps h) and i) the predetermined time points t2ⱼ depend on the predetermined time points t1ᵢ **in that** the predetermined time points t2ⱼ and the predetermined time points t1ᵢ are the same time points;
- in step j) the third predetermined time point t2ₕ is the same time point than the first predetermined time point t1ₕ and the fourth predetermined time point t2ₗ is the same time point than the second predetermined time point t1ₗ.

16. The method according to claim 14, **characterized in that**:
- in step c) the processed temperature measurements T'ᵢ are compared with each other so as to identify the highest processed temperature measurement and the lowest processed temperature measurement;
- in step d) the first processed temperature measurement T'ₕ is the highest processed temperature measurement and the second processed temperature measurement T'ₗ is the lowest processed temperature measurement;
- in step f) the first action A is aborting the method;
- in step g) the second action B is going to step h);
- in steps h) and i) the predetermined time points t2ⱼ depend on the predetermined time points t1ᵢ **in that** the predetermined time points t2ⱼ and the predetermined time points t1ᵢ are lagged in time;
- in step j) the third predetermined time point t2ₕ is the same time point than the first predetermined time point t1ₕ and the fourth predetermined time point t2ₗ is the same time point than the second predetermined time point t1ₗ.

17. The method according to claim 16, wherein the time lag is a predetermined time lag that is less than 10 minutes.

18. The method according to any one of the claims 14 to 17, wherein the processing of the temperature measurements Tᵢ and/or the pressure measurements Pⱼ consists of memorizing Tᵢ and/or Pⱼ respectively.

19. The method according to any one of the claims 14 to 18, wherein the processing of the temperature measurements Tᵢ and/or the pressure measurements Pⱼ consists of applying a mathematical function to Tᵢ and/or Pⱼ, and wherein the mathematical function is parameter identification.

20. The method according to claim 19, wherein the parameter identification is an interpolation of the measurements Tᵢ and/or Pⱼ.

21. The method according to claim 19, wherein the parameter identification is a filtering of the measurements Tᵢ and/or Pⱼ, for example a Kalman filtering or weighting filtering.

22. The method according to claim 14, **characterized in that**:
- in step c) each processed temperature measurements T'ᵢ is compared with a highest processed temperature measurement or a lowest processed temperature measurement measured at a previous predetermined time points, so as to update the highest processed temperature measurement or the lowest processed temperature measurement;
- in step d) the first processed temperature measurement is the highest processed temperature measurement T'ₕ and the second processed temperature measurement is the lowest processed temperature measurement T'ₗ;
- in step f) the first action A is continuing to measure temperature T and pressure P in the fuel system;
- in step g) the second action B is stopping measuring temperature T and pressure P in the pressurized fuel system and going to step h);
- aborting the method after step l).

23. A method for determining whether there is leak present in a pressurized fuel system mounted on board of a vehicle when the vehicle is key-off, **characterized in that** the method comprises preferably successive steps as follows:
- measuring temperature T and pressure P in the pressurized fuel system at predetermined time points;
- comparing temperature measurements Tᵢ with each other, so as to calculate at least a first greatest temperature differential T_{Δ1}, and a second greatest temperature differential T_{Δ2};
- comparing the first greatest temperature differential T_{Δ1} with a predetermined threshold for temperature differential T1_{Δ};
- if the first greatest temperature differential T_{Δ1} is less than the predetermined threshold for temperature differential T1_{Δ}, aborting the method;
- if the first greatest temperature differential T_{Δ1} is equal to or greater than the predetermined threshold for temperature differential T1_{Δ}, calculating a first pressure differential P_{Δ1} between the two pressure measurements Pⱼ measured at the same time point with the two temperature measurements Tᵢ corresponding to the first greatest temperature differential T_{Δ1};
- comparing the first pressure differential P_{Δ1} with a predetermined threshold for pressure differential P1_{Δ}, and determining there may be leak present in the pressurized fuel system if the first pressure differential P_{Δ1} is equal to or less than the predetermined threshold for pressure differential P1_{Δ}, and then comparing the second greatest temperature differential T_{Δ2} with the predetermined threshold for temperature differential T1_{Δ};
- if the second greatest temperature differential T_{Δ2} is also equal to or greater than the predetermined threshold for temperature differential T1_{Δ}, calculating a second pressure differential P_{Δ2} between the two pressure measurements Pⱼ measured at the same time point with the two temperature measurements Tᵢ corresponding to the second greatest temperature differential T_{Δ2};
- comparing the second pressure differential P_{Δ2} with the predetermined threshold for pressure differential P1_{Δ}, and determining there is leak present in the pressurized fuel system if the second pressure differential P_{Δ2} is also equal to or less than the predetermined threshold for pressure differential P1_{Δ}, and hereby aborting the method.

24. A method according to claim 23 wherein the results of the comparison of the two pressure differentials P_{Δ1}, P_{Δ2} with the said predetermined thresholds leads to contradictory conclusions and wherein priority is given to the comparison operated with the pair of measures having the largest temperature differential.

25. A leak determination system for determining if there is leak present in a pressurized fuel system mounted on board of a vehicle when the vehicle is key-off, comprising a temperature measuring device (7) for measuring a liquid temperature T and/or a vapor temperature in the pressurized fuel system, a pressure measuring device (6) for measuring vapor pressure P in the pressurized fuel system and a central control unit (9), **characterized in that** the leak determination system is capable of implementing the method according to any one of claims 1- 24.

26. A vehicle comprising a pressurized fuel system, **characterized in that** it comprises a leak determination system according to the preceding claim.
